Europäisches Patentamt

European Patent Office

Office européen des brevets

(11) Veröffentlichungsnummer: **0 001 110**
A2

(19)

## (12) EUROPÄISCHE PATENTANMELDUNG

(21) Anmeldenummer: 78100828.9

(22) Anmeldetag: 06.09.78

(51) Int. Cl.²: **C 08 L 23/06**
**F 16 L 9/12, C 08 J 3/22**
**//(C08L23/06,23/08,C08K3/04)**

(30) Priorität: 12.09.77 DE 2741005

(43) Veröffentlichungstag der Anmeldung:
21.03.79 Patentblatt 79/6

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Boettcher, Klaus, Dr.
Hubertusstrasse 57
D-5047 Wesseling(DE)

(72) Erfinder: Luig, Franz Josef, Dr.
Wilhelm-Leuschner-Strasse 8
D-5042 Erftstadt-Lechenich(DE)

(72) Erfinder: Zacher, Wieland, Dr.
Lauenburger Strasse 2
D-5047 Wesseling(DE)

(72) Erfinder: Unkrueer, Wolfgang, Dr.
Kreuzstrasse 56
D-5306 Bornheim-Merten(DE)

(54) Verwendung eines Russkonzentrats auf Basis eines Äthylencopolymerisats zur Herstellung von Polyäthylenformmassen für Rohre.

(57) Die Erfindung betrifft die Verwendung einer homogenen Mischung aus 70 bis 95 Gewichtsprozent Hochdruckpolyäthylen und 5 bis 30 Gewichtsprozent eines Rußkonzentrats, bestehend aus 50 bis 95 Gewichtsprozent eines Äthylencopolymerisats mit einpolymerisiertem monoäthylenisch ungesättigtem Carbonsäureester, wie Äthylen-Vinylacetat-Copolymerisat und 5 bis 50 Gewichtsprozent Ruß mit Teilchengrößen von 5 bis 70 μm, zur Herstellung von Rohren. Die Rußkonzentrate können in üblicher Weise stabilisiert sein. Die mit der Erfindung erzielten Vorteile bestehen insbesondere darin, daß die aus der Mischung gefertigten Rohre eine drei bis sechsfach höhere Zeitstandfestigkeit aufweisen als Rohre, die aus Formmassen hergestellt waren, zu deren Einfärbung Rußkonzentrate aus Polyäthylen und Ruß verwendet worden waren.

Croydon Printing Company Ltd.

BASF Aktiengesellschaft                    O.Z. 0050/032789

⌐Verwendung eines Rußkonzentrats auf Basis eines Äthylencopolymerisats zur Herstellung von Polyäthylenformmassen
für Rohre

Die Erfindung betrifft die Verwendung von Mischungen aus
Polyäthylen und einem Rußkonzentrat auf Basis eines Äthylencopolymerisats zur Herstellung von Rohren.

Bei derartigen Kunststoffbauteilen handelt es sich um Formkörper, die für eine lange Gebrauchsdauer vorgesehen sind
und die ein hohes Festigkeitsverhalten aufweisen müssen,
insbesondere wenn sie für längere Zeit unter einem gewissen
Innendruck stehen.

Es ist bekannt, zur Herstellung von Rohren Polyäthylen niederer Dichte einzusetzen. Aus Gründen der Verarbeitbarkeit
und um nicht zu steife Rohre zu erhalten, die besonders
beim Einsatz als Wasserrohre schwierig zu verlegen sind,
wählt man in der Praxis meist ein Polyäthylenmaterial mit
Dichten zwischen 0,920 und 0,925 g/cm$^3$ und einem Schmelzindex zwischen 0,3 und 1,0 g/10 min. aus. Zur Stabilisierung des Materials wird das Polyäthylen mit Ruß schwarz
eingefärbt und zusätzlich mit üblichen Stabilisatoren versetzt. Die Einfärbung geschieht meist in der Weise, daß
man ein Polyäthylen-Ruß-Konzentrat mit Rußgehalten zwischen

Fre/Fe

5 und 50 Gewichtsprozent und Stabilisatorgehalten zwischen 0,01 und 5 Gewichtsprozent herstellt und dieses Rußkonzentrat in eine größere Menge Polyäthylen in üblicher Weise unter Verwendung von Knetern, Walzwerken, Schneckenextrudern oder Scheibenknetern einarbeitet oder gegebenenfalls einem Strom aus geschmolzenem Polyäthylen einmischt. Es wird üblicherweise soviel Rußkonzentrat verwendet, daß in der erhältenen Formmasse für Rohre 1 bis 10 Gewichtsprozent Ruß enthalten sind. Als Ruß haben sich die üblichen Rußsorten, insbesondere Gasruß und Ofenruß, bewährt.

Es hat sich aber gezeigt, daß die Zeitstandfestigkeit der erhaltenen Rohre, gemessen nach ISO-Vorschlag DOC 138-5N484, zu wünschen übrig läßt. Die Zeitstandfestigkeit der Rohre sollte bei einer Belastung entsprechend einer Umfangsspannung von 2,9 N/mm$^2$ bei 70°C (vgl. ISO-Vorschlag DOC 138-5N484) über 100 Stunden liegen.

Der Erfindung lag die Aufgabe zugrunde, eine rußhaltige Polyäthylenmischung aufzufinden, aus der Rohre mit einer hohen Zeitstandfestigkeit herstellbar sind.

Diese Aufgabe wurde durch die Verwendung einer homogenen Mischung aus

A) 70 bis 95 Gewichtsprozent Polyäthylen der Dichte von 0,918 bis 0,925 g/cm$^3$ und des Schmelzindex von 0,3 bis 1,0 g/10 min. und

B) 5 bis 30 Gewichtsprozent eines Rußkonzentrats, bestehend aus

    a) 50 bis 95 Gewichtsprozent eines Äthylencopolymerisats aus 50 bis 95 Gewichtsprozent einpolymerisiertem Äthylen und 5 bis 50 Gewichtsprozent einpolymerisier-

tem monoäthylenisch ungesättigtem Carbonsäureester mit einem Schmelzindex von 0,1 bis 100 g/10 min. und einer Dichte von 0,920 bis 0,960 g/cm$^3$,

b) 5 bis 50 Gewichtsprozent Ruß mit Teilchengrößen von 5 bis 70 $\mu$m und gegebenenfalls

c) 0 bis 5 Gewichtsprozent eines üblichen Stabilisators

gelöst.

Obige Mischungen und ein Verfahren zur Herstellung dieser Massen sind an sich aus der DT-PS 1 226 782 bekannt. Zu erwähnen ist lediglich, daß die Schmelzindices der Polymerisate nach ASTM D 1238-65 T bei einer Temperatur von 190$^\circ$C und einem Auflagegewicht von 2,16 kp und die Dichten nach DIN 53 479 gemessen wurden.

Als Äthylencopolymerisate sind solche geeignet, die weniger als 50 Gewichtsprozent, bevorzugt 10 bis 35 Gewichtsprozent, eines Vinylesters einer $C_2$- bis $C_4$-Alkancarbonsäure oder eines $C_1$- bis $C_8$-Alkylesters einer $C_3$- bis $C_4$-Alkencarbonsäure einpolymerisiert enthalten. Als Vinylester kommen z.B. Vinylacetat oder Vinylpropionat in Frage, als Alkencarbonsäureester sind insbesondere die Acryl- und Methacrylsäureester des Methanols, Äthanols, Propanols, n-Butanols und des tert.-Butanols geeignet. Die Copolymerisate weisen einen Schmelzindex von 0,1 bis 100, bevorzugt von 1 bis 10 g/10 min. und eine Dichte von 0,920 bis 0,960 g/cm$^3$ auf. Die genannten Copolymerisate sind aus der Polymerchemie wohl bekannt, so daß auf deren Herstellung an dieser Stelle nicht näher eingegangen werden muß.

Der Rußgehalt des Konzentrats B) beträgt 5 bis 50 Gewichtsprozent, vorzugsweise 30 bis 35 Gewichtsprozent. Es werden

die üblichen Rußsorten mit Teilchengrößen kleiner als 70 /um, etwa von 5 bis 70 /um, bevorzugt 15 bis 35 /um, verwendet. Besonders bewährt haben sich Gasruß und Ofenruß.

Die Rußkonzentrate können in üblicher Weise stabilisiert sein, wobei der Gehalt des Konzentrats B) an Stabilisator zwischen 0,01 und 5, vorzugsweise zwischen 0,1 und 1 Gewichtsprozent, liegt.

Die mit der Erfindung erzielten Vorteile bestehen insbesondere darin, daß bei Verwendung eines Rußkonzentrats auf Basis des oben angegebenen Copolymerisats zur Einfärbung der Polyäthylenformmasse für die Rohrherstellung die daraus gefertigten Rohre eine drei- bis sechsfach höhere Zeitstandfestigkeit nach dem eingangs angegebenen Test zeigen als Rohre, die aus Formmassen hergestellt waren, zu deren Einfärbung Rußkonzentrat aus üblichem Äthylenhomopolymerisat verwendet worden war.

Beispiel 1

In einem Schneckenwellenextruder wurden 5 Proben eines Polyäthylens der Dichte 0,923 g/cm$^3$ und mit einem Schmelzindex von 0,5 g/10 min. aufgeschmolzen. Der Schmelze wurde ein Rußkonzentrat, das 40 Gewichtsprozent Ruß der mittleren Teilchengröße 25 /um und 1,6 Gewichtsprozent eines Stabilisators gegen oxidativen Abbau enthielt, zugesetzt. Zur Herstellung des Rußkonzentrats wurden ein Polyäthylen der Dichte 0,919 g/cm$^3$ und mit einem Schmelzindex von 1,5 g/10 min. verwendet.

Das Rußkonzentrat wurde dem Ausgangspolyäthylen in einer Menge von 5,6 Gewichtsprozent zugesetzt.

Die so erhaltenen schwarz eingefärbten Formmassen wurden auf einem weiteren Schneckenwellenextruder zu Rohren mit Abmessungen nach DIN 8072 verarbeitet. Rohrabschnitte aus diesen Rohren wurden bei $70^{o}$C einer Belastung entsprechend einer Umfangsspannung von 2,9 N/mm$^2$ ausgesetzt und die Mindeststandzeit ermittelt. (vgl. ISO-Vorschläge DOC 138-5N484).

| | |
|---|---|
| Probe 1 | 21 Stunden |
| Probe 2 | 93 Stunden |
| Probe 3 | 69 Stunden |
| Probe 4 | 6 Stunden |
| Probe 5 | 43 Stunden |

## Beispiel 2

Es wurden wiederum 5 Proben eines Polyäthylens, wie in Beispiel 1 beschrieben, in gleicher Weise mit einem Rußkonzentrat (mittlere Teilchengröße des Rußes 25 µm versetzt.

Abweichend vom Beispiel 1 wurde zur Herstellung des Rußkonzentrates ein Äthylen-Vinylacetat-Copolymerisat mit einer Dichte von 0,932 g/cm$^3$, einem Schmelzindex von 4 g/10 min. und einem Vinylacetatgehalt von 13 Gewichtsprozent verwendet.

Das Rußkonzentrat wurde dem Ausgangspolyäthylen wieder in einer Menge von 5,6 Gewichtsprozent zugesetzt und aus den daraus erhaltenen Formmassen wurden Rohre in der beschriebenen Weise hergestellt und geprüft. Folgende Mindeststandzeiten wurden ermittelt:

| | |
|---|---|
| Probe 1 | 137 Stunden |
| Probe 2 | 303 Stunden |
| Probe 3 | 231 Stunden |
| Probe 4 | 45 Stunden |
| Probe 5 | 140 Stunden |

Patentanspruch

Verwendung einer homogenen Mischung aus

A) 70 bis 95 Gewichtsprozent Polyäthylen der Dichte von 0,918 bis 0,925 $g/cm^3$ und des Schmelzindex von 0,3 bis 1,0 g/10 min. und

B) 5 bis 30 Gewichtsprozent eines Rußkonzentrats, bestehend aus

a) 50 bis 95 Gewichtsprozent eines Äthylencopolymerisats aus 50 bis 95 Gewichtsprozent einpolymerisierem Äthylen und 5 bis 50 Gewichtsprozent einpolymerisiertem monoäthylenisch ungesättigem Carbonsäureester mit einem Schmelzindex von 0,1 bis 100 g/10 min. und einer Dichte von 0,920 bis 0,960 $g/cm^3$,

b) 5 bis 50 Gewichtsprozent Ruß mit Teilchengrößen von 5 bis 70 µm und gegebenenfalls

c) 0 bis 5 Gewichtsprozent eines üblichen Stabilisators

zur Herstellung von Rohren.